# FASCICULE DE BREVET EUROPEEN

(11) **EP 2 219 353 B1**
(45) Date de publication et mention de la délivrance du brevet: **04.07.2012**
(21) Numéro de dépôt: 09180913.7
(22) Date de dépôt: 29.12.2009
(51) Int. Cl.: H04M 1/725, H04M 1/02, G06K 19/077, G06K 7/00

(54) **Téléphone portable incluant une batterie et un module de communication à champ proche**
Mobiltelefon mit Batterie und einem Nahfeldkommunikationsmodul
Mobile telephone comprising a battery and a near field communication module

(30) Priorité: 13.02.2009 FR 0950927
(43) Date de publication de la demande: 18.08.2010
(73) Titulaire: STMicroelectronics (Rousset) SAS, 13790 Rousset (FR)
(72) Inventeur: Rizzo, Pierre, 13100, AIX EN PROVENCE (FR); Charles, Alexandre, 13390, AURIOL (FR)
(74) Mandataire: de Beaumont, Michel

(56) Documents cités:
- EP-A2- 1 804 393
- WO-A1-2006/085246
- WO-A1-2007/113729

## Description

### Domaine

La présente invention concerne de façon générale les équipements électroniques et, plus particulièrement, les dispositifs mobiles de télécommunication équipés d'une batterie. L'invention s'applique plus particulièrement à des tels dispositifs susceptibles d'établir, outre des communications utilisant un réseau de téléphonie mobile, des communications à champ proche.

### Exposé de l'art antérieur

Les communications dites à champ proche sont basées sur des protocoles de communication sans contact à faible distance entre deux éléments. Ces protocoles utilisent généralement un champ électromagnétique généré par l'un des éléments, désigné lecteur, pour alimenter l'autre élément, désigné transpondeur ou carte. La porteuse de téléalimentation sert également de porteuse à la communication. Ces protocoles de communication sont généralement désignés par leur norme (par exemple, 14443-A, B JIS, NFC, Forum, ECMA).

Parmi ces protocoles, le protocole connu sous la dénomination NFC (Near Field Communication) prévoit qu'un même module communiquant peut agir soit comme un lecteur sans contact soit comme une carte sans contact (transpondeur). Selon son mode de fonctionnement, ce module mixte de communication NFC exploite alors différemment les circuits électroniques du dispositif qui l'héberge.

La présente invention s'applique plus particulièrement à des dispositifs mobiles de télécommunication susceptibles de supporter le protocole NFC, également connu sous les références des normes ISO 14443, ECMA 340 et 352, ETSI TS 102 613 (Smart Cards, UICC - Contactless Front-end (CLF) Interface; Part 1: Physical and data link layer characteristics) et ETSI TS 102 622 (Smart Cards, UICC - Contactless Front-end (CLF) Interface; Host Controller Interface (HCI)).

Dans le protocole NFC, le dispositif contenant le module de communication mixte est généralement un dispositif mobile de télécommunication susceptible d'exploiter également un réseau de téléphonie mobile (type GSM). Par exemple, il peut s'agir d'un téléphone mobile, d'un assistant personnel (PDA) communiquant, etc.

L'objectif est d'accroître le champ d'application des dispositifs de téléphonie mobile en leur annexant des fonctions autrement réservées à des transpondeurs électromagnétiques (par exemple des titres de transport, des porte-monnaie électroniques, etc.). Le dispositif mobile remplace alors la carte sans contact utilisée pour valider une transaction avec un lecteur (borne de passage, lecteur de porte-monnaie électronique, etc.). La possibilité de communiquer également par le réseau de téléphonie mobile permet de valider des transactions dans des protocoles dits "en ligne" (on-line). De plus, le dispositif mobile peut également fonctionner en lecteur de carte sans contact, par exemple pour lire une donnée de texte ou un lien URL dans un tag ou une balise sans contact supportant les protocoles ou formats de données prédéfinis dans le NFC Forum, par exemple pour recharger un titre de transport ou un porte monnaie électronique porté par une carte sans contact séparée, en utilisant le réseau de téléphonie pour valider la transaction, par exemple par un établissement bancaire.

Lorsque le dispositif fonctionne en mode lecteur, son module NFC génère le champ électromagnétique de communication sans contact en puisant l'énergie nécessaire sur la batterie du dispositif mobile. Lorsque le dispositif fonctionne en mode carte, son module NFC doit être capable de fonctionner même lorsque la batterie du dispositif est déchargée ou lorsque la fonction de téléphonie est désactivée, en extrayant l'énergie nécessaire à son fonctionnement du champ électromagnétique généré par le lecteur.

Pour simplifier, on fera par la suite référence à un téléphone mobile comme exemple de dispositif mobile de télécommunication.

Une particularité des téléphones mobiles est d'utiliser un module d'identification d'abonné (SIM - Subscriber Identification Module), généralement désigné carte SIM, et contenant notamment les outils et identifiants requis par l'opérateur de téléphonie mobile pour accéder à son réseau. La carte SIM communique avec le processeur du téléphone à des fins d'identification et d'authentification de l'abonnement de téléphonie mobile.

Dans un protocole de communication sans contact, il existe également un besoin d'identification et d'authentification des dispositifs qui communiquent.

On connaît des téléphones mobiles intégrant (typiquement sur une même carte mère) les circuits de téléphonie mobile et des circuits de communication sans contact. Une telle solution est toutefois réservée aux téléphones haut de gamme en raison du surcoût lié au module NFC. De plus, ces téléphones ne supportent généralement que le mode lecteur du protocole NFC.

Les développements du protocole NFC prévoient qu'un même module d'identification d'abonné puisse être partagé par le téléphone et son module NFC. Cela revient à utiliser la carte SIM du téléphone à des fins d'identification et d'authentification pour la communication à champ proche. Le protocole de communication (SWP - Single Wire Protocol) entre la carte SIM et le module NFC est toutefois différent du protocole (fixé par une norme ISO 7816) utilisé entre la carte SIM et le processeur du téléphone. On désignera par SIM-NFC, une carte SIM supportant au moins les deux protocoles, donc un fonctionnement NFC.

Pour partager un même module d'identification d'abonné (une même carte SIM) entre le téléphone et son module NFC, et supporter le mode carte du protocole NFC, la carte SIM-NFC doit pouvoir être alimentée par le module NFC quand le téléphone est éteint (ou que son processeur est désactivé).

Il serait souhaitable de disposer d'un dispositif mobile de télécommunication utilisant un réseau de type téléphonie mobile, capable également de supporter un fonctionnement selon le protocole NFC en mode carte et en mode lecteur, contrôlé par le module d'identification d'abonné du dispositif mobile.

Il serait également souhaitable qu'un utilisateur puisse transformer de façon réversible un dispositif mobile de télécommunication pour lui conférer des fonctions de communication à champ proche.

Le document WO2006/085246 décrit un procédé permettant le fonctionnement d'un dispositif NFC dans un dispositif de communication mobile et prévoit de détecter la charge d'une source d'énergie en mode sans fil.

Le document EP-A-1 804 393 décrit un pack batterie pour un terminal de communication mobile équipé d'un routeur NFC ;
le document WO2007/113729 décrit un procédé d'allocation dynamique des contacts d'une carte à puce d'abonné dans un terminal mobile.

### Résumé

Un objet de la présente invention est de pallier tout ou partie des inconvénients des dispositifs de télécommunication usuels à fonction NFC.

Un objet d'un mode de réalisation vise plus particulièrement à permettre une transformation d'un dispositif mobile en un dispositif mobile à module NFC par un simple changement de sa batterie.

Pour atteindre tout ou partie de ces objets ainsi que d'autres, il est prévu un dispositif mobile de télécommunication comportant :
au moins un circuit de télécommunication ;
au moins un module d'identification d'abonné ;
au moins un ensemble comportant au moins une batterie d'alimentation ; et
un commutateur de sélection entre une alimentation du module d'identification d'abonné par ledit ensemble et par ledit circuit de télécommunication en fonction de la présence ou non d'un module de communication à champ proche dans ledit ensemble.

Il est également prévu un dispositif mobile de télécommunication comportant :
au moins un circuit de télécommunication ;
au moins un premier connecteur propre à recevoir au moins un module d'identification d'abonné ; et
au moins un deuxième connecteur propre à être connecté à un ensemble comportant au moins une batterie d'alimentation, dans lequel le deuxième connecteur comporte :
   au moins un premier contact relié à au moins un premier contact dudit premier connecteur ; et
   au moins un deuxième contact relié audit circuit,
   lesdits premier et deuxième contacts du deuxième connecteur étant propres à être reliés électriquement entre eux à l'aide dudit ensemble.

Selon un mode de réalisation de la présente invention, la connexion entre eux desdits contacts dépend de la présence ou non d'un module de communication à champ proche dans ledit ensemble.

Selon un mode de réalisation de la présente invention, ledit deuxième connecteur comporte au moins un troisième contact relié à au moins un deuxième contact du premier connecteur.

Selon un mode de réalisation de la présente invention, le deuxième connecteur comporte au moins un quatrième et un cinquième contacts reliés audit circuit.

Selon un mode de réalisation de la présente invention, le deuxième connecteur comporte au moins un sixième contact relié audit circuit.

Selon un mode de réalisation de la présente invention, le dispositif comporte en outre un commutateur mécanique de liaison desdits premier et deuxième contacts du deuxième connecteur, propre à être actionné par ledit ensemble.

Il est également prévu un ensemble pour un tel dispositif, comportant :
au moins une batterie ;
au moins un module de communication à champ proche.

Il est également prévu un ensemble pour un tel dispositif, comportant au moins une batterie et au moins un élément apte à commander une liaison électrique entre les premier et deuxième contacts du deuxième commutateur.

Selon un mode de réalisation de la présente invention, l'ensemble comporte un élément mécanique d'actionnement dudit commutateur.

Selon un mode de réalisation de la présente invention, l'ensemble comporte au moins un troisième connecteur apte à connecter électriquement les premier et deuxième contacts du deuxième connecteur.

### Brève description des dessins

Ces objets, caractéristiques et avantages, ainsi que d'autres seront exposés en détail dans la description suivante de modes de réalisation particuliers faite à titre non-limitatif en relation avec les figures jointes parmi lesquelles :
la figure 1 est un schéma bloc d'une architecture de téléphone mobile usuel équipé d'un module NFC ;
les figures 2A et 2B représentent schématiquement de face et de côté un exemple de téléphone mobile ;
les figures 3A et 3B sont des schémas blocs d'un mode de réalisation d'un dispositif mobile de télécommunication apte à supporter un protocole NFC ;
la figure 4 est une vue de face schématique d'un exemple de connecteurs d'un téléphone mobile selon le mode de réalisation des figures 3A et 3B ;
les figures 5A et 5B représentent un mode de réalisation d'un ensemble batterie d'un téléphone mobile, respectivement en perspective éclatée et assemblé ; et
les figures 6A et 6B sont des schémas blocs d'un autre mode de réalisation d'un dispositif mobile de télécommunication apte à supporter le protocole NFC.

De mêmes éléments ont été désignés par de mêmes références aux différentes figures.

### Description détaillée

Par souci de clarté, seuls les éléments utiles à la compréhension de l'invention ont été représentés et seront décrits. En particulier, les circuits propres au dispositif mobile pour établir les communications sur un réseau de télécommunication de type téléphonie mobile, de même que les circuits du module NFC pour établir les communications en champ proche n'ont pas été détaillés, l'invention étant compatible avec les éléments et protocoles habituels. De plus, le dispositif mobile est généralement capable de supporter d'autres fonctions (par exemple, traitement de données, lecteurs média, appareils photo, positionnement GPS, etc.) qui ne seront pas détaillées, l'invention étant là encore compatible avec toute fonction additionnelle usuelle. Pour simplifier, on fait référence à un réseau de téléphonie mobile pour désigner le réseau de télécommunication exploité par le dispositif mobile, même si ce dispositif n'échange que des données (par exemple, un assistant personnel - PDA). En outre, les différents modes de réalisation seront décrits en prenant pour exemple un téléphone mobile mais ils se transposent plus généralement à tout dispositif mobile de télécommunication.

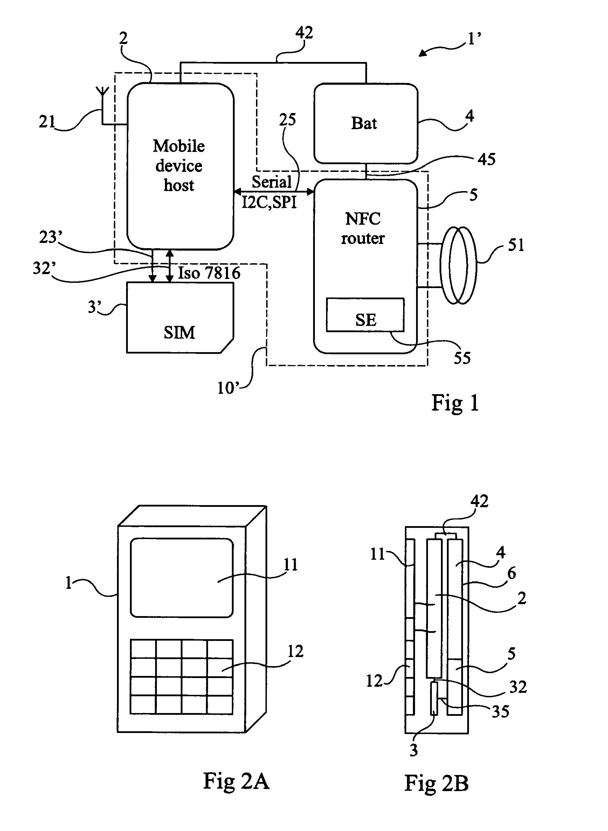

La figure 1 est un schéma bloc illustrant l'architecture usuelle d'un téléphone mobile l' intégrant un module de communication à champ proche.

Pour l'établissement de communication avec le réseau de téléphonie mobile, le téléphone 1' comporte des circuits (bloc 2, Mobile device host) de traitement numérique (typiquement, au moins un processeur) et de communication reliés à une antenne 21 adaptée au réseau de téléphonie mobile. Ce ou ces circuits 2 incluent également les différents éléments de mémorisation des paramètres, commandes, et données ainsi qu'au moins tous les circuits requis pour mettre en oeuvre les fonctions de télécommunication. L'identification du téléphone 1' par le réseau de téléphonie s'effectue par un module d'identification d'abonné 3' (SIM), généralement appelé carte SIM. Cette carte est introduite dans un logement dédié donnant accès (liaison 32') à des contacts portés par (ou reliés à) la carte mère 10 du téléphone. La carte SIM sert notamment à paramétrer le téléphone (opérateur de télécommunication, numéro de téléphone, code d'accès à différents réseaux, etc.). Les circuits 2 sont alimentés (liaison 42) par une batterie 4 (Bat) susceptible d'être rechargée par des moyens non représentés. La communication entre la carte SIM 3' et les circuits 2 s'effectue généralement selon un protocole normalisé (par exemple, connu sous la norme ISO 7816) et la carte 3' est alimentée (liaison 23') par le bloc 2.

Dans l'exemple de la figure 1, la carte mère 10' du téléphone intègre à la fois les circuits 2 et un module 5 (NFC router) de communication à champ proche (NFC), parfois appelé routeur NFC. Ce module 5 comporte des circuits électroniques requis pour émettre et recevoir des données en champ proche par l'intermédiaire d'une antenne 51. Le module 5 intègre son propre élément sécurisé d'identification 55 (SE).

Lorsqu'il fonctionne en mode lecteur selon le protocole NFC, le module 5 est contrôlé par le processeur 2 du téléphone 1', généralement par une liaison série 25 (Serial), par exemple de type I2C ou SPI. Le module 5 est alimenté (liaison 45) par la batterie 4.

Un téléphone 1' tel que représenté en figure 1 est susceptible de fonctionner en mode carte, mais sans exploiter alors les ressources externes au module NFC. En particulier, il n'est pas adapté à partager une carte SIM entre le processeur 2 et le module NFC et ne supporte donc que partiellement les fonctionnalités offertes par la technologie NFC, notamment les modes contrôlés par la carte SIM via la liaison SWP.

Pour qu'un téléphone mobile puisse partager un même module d'identification d'abonné (Subscriber Identification Module) entre ses circuits de téléphonie mobile et son module NFC, la carte SIM doit supporter le mode NFC. Cette carte SIM-NFC doit notamment pouvoir être reliée au module NFC par une liaison SWP. De plus, pour fonctionner en mode carte, la carte SIM-NFC doit pouvoir être alimentée sans passer par le circuit 2 qui peut être désactivé (par exemple, téléphone en veille ou éteint) et même si la batterie est déchargée.

Les figures 2A et 2B sont des représentations schématiques de face et de profil d'un mode de réalisation d'un téléphone mobile apte à partager une carte SIM-NFC entre ses circuits de téléphonie mobile et un module NFC. Le téléphone comporte généralement un écran 11 et un clavier 12 reliés aux circuits 2 portés par la carte mère du téléphone. Le boîtier du téléphone inclut un logement pour la carte SIM-NFC 3 et un logement pour un ensemble amovible 6 contenant au moins une batterie 4. Cet ensemble 6, habituellement désigné par "batterie pack" peut inclure des circuits de régulation de tension et sécurisation de la charge et décharge. Dans le mode de réalisation représenté, l'ensemble batterie 6 inclut en outre au moins un module NFC 5 et son antenne. Le connecteur de la carte SIM-NFC comporte en outre des liaisons directes 35 avec un connecteur (non représenté en figure 1B) de l'ensemble batterie 6.

On aurait pu penser intégrer dans l'ensemble batterie 6 du téléphone, non seulement la batterie 4 et le module NFC 5, mais également la carte SIM-NFC 3 (donc son connecteur). Une telle solution serait compatible avec un fonctionnement en mode carte dans la mesure où l'alimentation de la carte SIM pourrait provenir du routeur NFC pour supporter des cas où le module NFC est téléalimenté par le lecteur avec lequel il communique. Toutefois, une telle solution serait irréversible, le téléphone mobile ne pouvant fonctionner qu'avec un ensemble batterie équipé d'un connecteur de carte SIM-NFC. Or, les fabricants de téléphones cherchent souvent à ce que leurs nouveaux modèles soient compatibles avec les batteries existantes. Par ailleurs, le téléphone serait alors forcément utilisé avec un module NFC, ce qui revient de nouveau à dédier cette solution à des téléphones haut de gamme (sauf à créer des ensembles batterie spécifiques pourvus uniquement d'une batterie et d'un logement de carte SIM, ce qui complexifie encore le système).

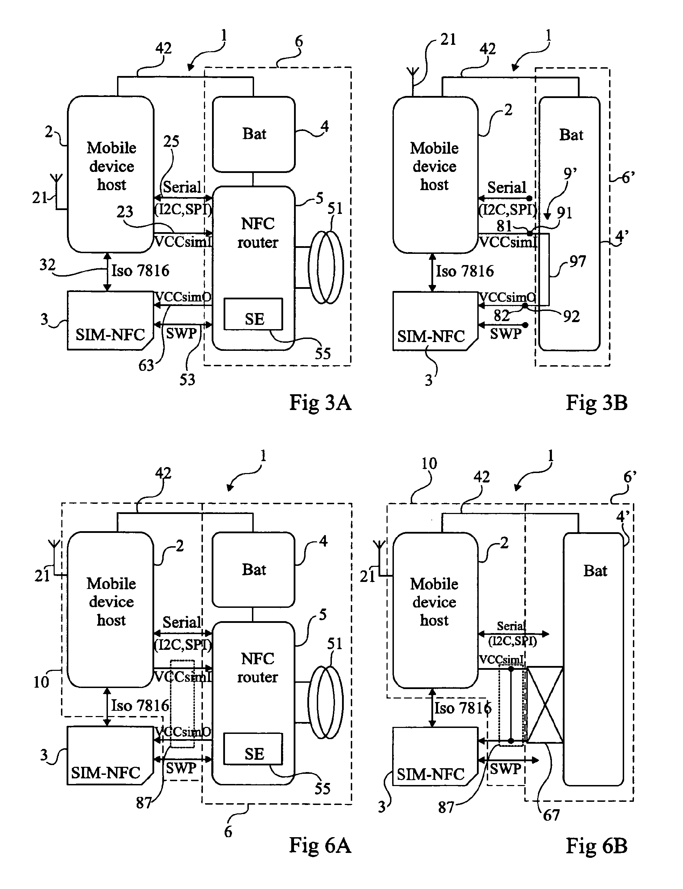

Les figures 3A et 3B sont des schémas blocs d'un mode de réalisation d'un téléphone mobile 1 capable d'intégrer ou non un module de communication NFC en fonction de l'ensemble batterie 6 qui y est inséré. La figure 3A représente l'architecture du téléphone avec un ensemble batterie 6 intégrant un module NFC 5. La figure 3B représente cette architecture avec un ensemble batterie 6' dépourvu de module NFC.

Comme précédemment, des circuits 2 de télécommunication communiquent avec le réseau de téléphonie mobile par l'intermédiaire d'une antenne 21. La carte mère du téléphone porte (ou est reliée à) des contacts d'un connecteur pour carte SIM-NFC pour des échanges entre le processeur du bloc 2 et les circuits électroniques de la carte SIM-NFC selon un protocole défini par la norme ISO 7816 (liaison 32). Toutefois, à la différence du téléphone 1' de la figure 1, l'alimentation de la carte SIM-NFC 3 transite par l'ensemble batterie 6. Cette fonctionnalité est illustrée en figure 3A par une liaison 23 (VCCsimI) reliant le bloc 2 à l'ensemble 6 et par une liaison 63 (VCCsimO) reliant l'ensemble batterie 6 à la carte SIM-NFC 3. Par ailleurs, le connecteur de la carte SIM-NFC 3 est relié par une liaison 53 au connecteur de l'ensemble 6 pour supporter des échanges selon un protocole unifilaire (SWP - Single Wire Protocol).

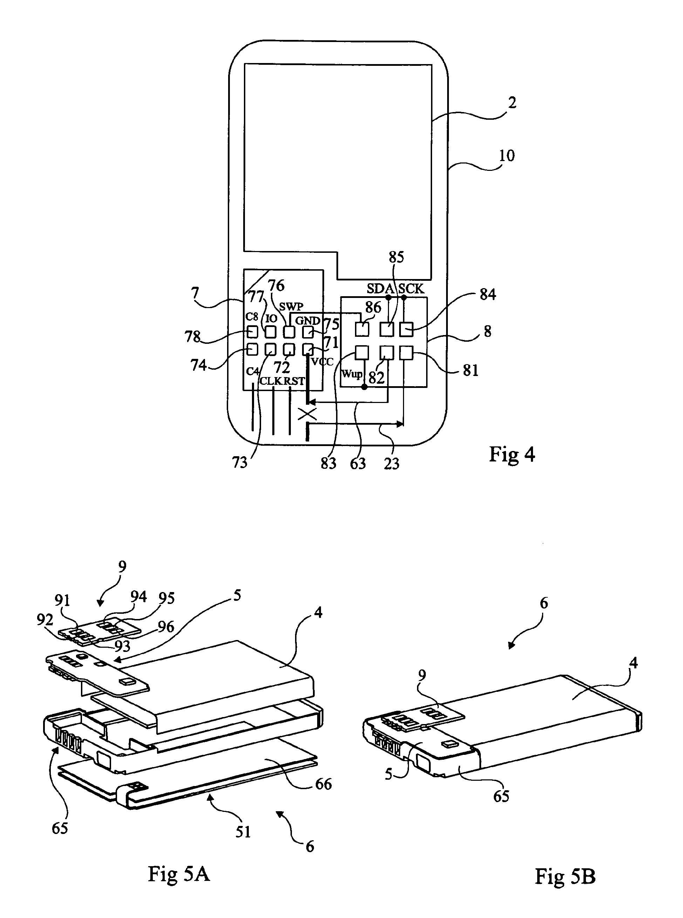

La figure 4 est une vue de face schématique d'un exemple de carte mère 10 du téléphone 1 portant le ou les circuits 2, un connecteur 7 de carte SIM-NFC 3 et un connecteur 8 de l'ensemble batterie 6. Le connecteur 7 comporte huit contacts (comme pour une carte SIM). Outre des contacts 71 et 75 d'alimentation (potentiel Vcc et masse GND), des contacts 72, 73 et 77 de la norme ISO 7816 (horloge CLK, réinitialisation RST, entrée-sortie IO) et deux contacts libres 74 et 78 (C4 et C8), un contact 76 (SWP) est destiné au module NFC. Ce contact 76 est relié à un contact 86 du connecteur 8. Ce dernier comporte six contacts parmi lesquels, outre le contact 86, deux contacts 84 et 85 de la liaison série 25 (par exemple pour les signaux SDA et SCK du protocole I2C), un contact 83 destiné à réveiller le téléphone quand celui-ci est en mode veille (Wup), et deux contacts 81 et 82 reliés (liaisons 23 et 63) respectivement à la carte mère pour véhiculer le signal VCCsimI depuis le circuit 2 et au contact 71 du connecteur 7. D'autres contacts non représentés sont présents dans le connecteur 8. Parmi ces contacts, on trouve au moins deux contacts véhiculant la tension batterie (Vbat et masse GND) et, de préférence, des contacts de gestion de charge de la batterie.

La sélection entre un fonctionnement avec une batterie standard (dépourvue de module NFC) ou avec une batterie pourvue d'un module NFC s'effectue, dans ce mode de réalisation, directement par un connecteur associé à la batterie.

Les figures 5A et 5B représentent, respectivement en perspective éclatée et assemblé, un exemple de réalisation de l'ensemble batterie 6 de la figure 3A. Cet ensemble ou boîtier comporte un cadre périphérique 65 à l'intérieur duquel sont logés une ou plusieurs batteries 4 et les circuits électroniques du module 5. En face, dite arbitrairement arrière, une antenne plane 51 (généralement une spire plane) est portée par une plaque isolante 66 (ou un film souple). L'antenne 51 est connectée par ses extrémités au module NFC et forme l'élément inductif d'un circuit oscillant (série ou parallèle) du système de communication à champ proche. Enfin, en face dite arbitrairement avant, un connecteur 9 définit des contacts destinés à coopérer avec ceux du connecteur 8 de la carte mère 10 (figure 4). On notera donc que, par rapport à une batterie standard où l'élément batterie 4' (figure 3B) occupe tout le volume de l'ensemble batterie, l'adjonction d'une fonction NFC engendre une légère réduction de la capacité de la batterie.

Grâce au transit de l'alimentation de la carte SIM-NFC 3 par l'ensemble 6, le téléphone 1 est non seulement en mesure de fonctionner en mode lecteur en étant alimenté par la batterie 4, mais également en mode carte en alimentant son module d'identification d'abonné directement. Pour la fonction de téléphonie, la carte 3 peut par ailleurs être alimentée par le circuit 2 grâce aux liaisons 23 et 63.

Selon ce mode de réalisation, le téléphone 1 peut être alimenté par un ensemble 6' (figure 3B) dépourvu de module NFC. Dans ce cas, le connecteur 9' de l'ensemble 6 comporte un pont conducteur 97 entre ses contacts 91 et 92. Ainsi, les contacts 81 et 82 sont reliés ce qui relie directement le circuit 2 à la carte SIM-NFC 3.

On pourrait également intégrer un commutateur électronique dans le bloc 2 pour sélectionner une alimentation de la carte SIM-NFC par l'intermédiaire du module NFC ou par le bloc 2 selon que l'ensemble batterie est ou non pourvu d'un tel module. Une telle solution requiert toutefois de veiller que, en l'absence d'alimentation fournie par la batterie, la liaison entre la carte SIM-NFC et le module NFC soit établie.

Les figures 6A et 6B sont des schémas blocs d'un autre mode de réalisation d'un téléphone mobile 1 capable d'intégrer un module de communication NFC selon l'ensemble batterie 6 qui y est inséré.

Par rapport au mode de réalisation des figures 5A et 5B, la différence est que la commutation entre la version avec module NFC et sans module NFC dans l'ensemble batterie est effectuée côté téléphone 1 et non côté ensemble batterie. Toutefois, cette commutation est toujours déclenchée par le type d'ensemble batterie inséré dans le téléphone 1. Pour cela, le téléphone 1 comporte, au niveau du connecteur 8 ou à un autre endroit de sa carte mère, un commutateur mécanique 87 entre les liaisons 23 et 63 véhiculant l'alimentation de la carte SIM-NFC 3. Par ailleurs, l'ensemble batterie 6' (figure 6B) comporte, en l'absence de module NFC, un ergot ou autre protubérance 67 apte à actionner le commutateur mécanique 87 en fermeture pour relier les conducteurs 23 et 63. En variante, l'ensemble batterie 6 (figure 6A) pourvu d'un module NFC 5 comporte un élément mécanique le différenciant de l'ensemble 6' pour ouvrir le commutateur 87 autrement fermé.

Un avantage des modes de réalisation décrits est que le module d'identification d'abonné reste inséré directement dans le dispositif mobile. Le cas échéant, le module NFC 5 peut néanmoins comporter un élément sécurisé d'identification.

Un autre avantage est que les modes de réalisation décrits sont compatibles avec un fonctionnement réversible du dispositif mobile selon qu'il est équipé d'une batterie associée ou non à un module NFC.

Un autre avantage est que le dispositif équipé d'un module NFC est compatible avec un fonctionnement en mode lecteur et en mode carte.

Des modes de réalisation particuliers ont été décrits. Diverses variantes et modifications apparaîtront à l'homme de l'art. En particulier, la mise en oeuvre pratique de l'invention est à la portée de l'homme du métier à partir des indications fonctionnelles données ci-dessus. De plus, bien que l'invention ait été décrite en relation avec des exemples particuliers de protocoles de communication internes au dispositif mobile, elle s'applique plus généralement quel que soit les protocoles d'échange de données entre les éléments internes au dispositif mobile. En outre, à chaque fois que l'on a fait référence à un élément, une variante peut comporter plusieurs éléments similaires. Par exemple, l'ensemble batterie peut comporter plusieurs modules NFC 5 dédiés à différentes applications, le dispositif 1 peut comporter plusieurs connecteurs 7 pour recevoir plusieurs cartes SIM, plusieurs connecteurs 8 pour recevoir plusieurs ensembles batterie, etc.

## Revendications

1. Dispositif mobile (1) de télécommunication comportant :
au moins un circuit de télécommunication (2) ;
au moins un module d'identification d'abonné (3) ;
au moins un ensemble (6) comportant au moins une batterie d'alimentation,
**caractérisé en ce qu'**un commutateur est adapté à effectuer une sélection entre une alimentation du module d'identification d'abonné par :
ledit ensemble en présence d'un module (5) de communication à champ proche dans ledit ensemble ; ou
ledit circuit de télécommunication sinon.

2. Dispositif mobile (1) de télécommunication comportant :
au moins un circuit de télécommunication (2) comportant au moins un ensemble (6) pourvu d'au moins une batterie d'alimentation ;
au moins un premier connecteur (7) propre à recevoir au moins un module d'identification d'abonné (3) ; et
au moins un deuxième connecteur (8) propre à être connecté audit ensemble, **caractérisé en ce que** le deuxième connecteur comporte :
au moins un premier contact (82) relié à au moins un premier contact dudit premier connecteur ; et
au moins un deuxième contact (81) relié audit circuit,
lesdits premier et deuxième contacts du deuxième connecteur étant propres à être reliés électriquement entre eux à l'aide dudit ensemble, en présence d'un module (5) de communication à champ proche dans ledit ensemble.

3. Dispositif selon la revendication 2, dans lequel ledit deuxième connecteur (8) comporte au moins un troisième contact (86) relié à au moins un deuxième contact (76) du premier connecteur (7).

4. Dispositif selon la revendication 3, dans lequel le deuxième connecteur (8) comporte au moins un quatrième et un cinquième contacts reliés audit circuit (2).

5. Dispositif selon la revendication 4, dans lequel le deuxième connecteur (8) comporte au moins un sixième contact (83) relié audit circuit (2).

6. Dispositif selon l'une quelconque des revendications 2 à 5, comportant un commutateur mécanique (87) de liaison desdits premier et deuxième contacts (81, 82) du deuxième connecteur (8), propre à être actionné par ledit ensemble (6, 6').

## Claims

1. A mobile telecommunication device (1) comprising:
at least one telecommunication circuit (2);
at least one subscriber identification module (3);
at least one assembly (6) comprising at least one supply battery; and
**characterized in that** a switch is adapted to select between a power supply of the subscriber identification module by:
said assembly in the presence of a near-field communication module (5) in said assembly, or
said telecommunication circuit if said module is not present.

2. A mobile telecommunication device (1) comprising:
at least one telecommunication circuit (2) comprising at least one assembly (6) comprising at least one power supply battery;
at least one first connector (7) capable of receiving at least one subscriber identification module (3); and
at least one second connector (8) capable of being connected to said assembly, **characterized in that** the second connector comprises:
at least one first contact (82) connected to at least one first contact of said first connector; and
at least one second contact (81) connected to said circuit,
said first and second contacts of the second connector being capable of being electrically connected to each other by means of said assembly, in the presence of a near-field communication module (5) in said assembly.

3. The device of claim 2, wherein said second connector (8) comprises at least one third contact (86) connected to at least one second contact (76) of the first connector (7).

4. The device of claim 3, wherein the second connector (8) comprises at least one fourth and one fifth contacts connected to said circuit (2).

5. The device of claim 4, wherein the second connector (8) comprises at least one sixth contact (83) connected to said circuit (2).

6. The device of any of claims 2 to 5, further comprising a mechanical switch (87) of connection of said first and second contacts (81, 82) of the second connector (8), capable of being actuated by said assembly (6, 6').

## Patentansprüche

1. Mobile Telekommunikationseinrichtung (1), mit folgenden Merkmalen:
wenigstens ein Telekommunikationsschaltkreis (2);
wenigstens ein Anschlussidentifikationsmodul (3);
wenigstens eine Anordnung (6), die wenigstens eine Versorgungsbatterie trägt,
**dadurch gekennzeichnet, dass** ein Schalter dazu eingerichtet ist, zwischen einer Versorgung des Anschlussidentifikationsmoduls
durch die Anordnung, wenn ein Nahfeld-Kommunikationsmodul (5) in der Anordnung vorhanden ist, oder
durch den Telekommunikationsschaltkreis, wenn dies nicht der Fall ist, auszuwählen.

2. Mobile Telekommunikationseinrichtung (1), mit folgenden Merkmalen:
wenigstens ein Telekommunikationsschaltkreis (2), der wenigstens eine Anordnung (6) mit wenigstens einer Energieversorgungsbatterie aufweist;
wenigstens ein erstes Verbindungsstück (7), das wenigstens ein Anschlussidentifikationsmodul (3) aufnehmen kann; und
wenigstens ein zweites Verbindungsstück (8), das mit der Anordnung verbunden werden kann, **dadurch gekennzeichnet, dass** das zweite Verbindungsstück umfasst:
wenigstens einen ersten Kontakt (82), der mit wenigstens einem ersten Kontakt des ersten Verbindungsstücks verbunden ist, und
wenigstens einen zweiten Kontakt (81), der mit dem Schaltkreis verbunden ist, wobei der erste und der zweite Kontakt des zweiten Verbindungsstücks mit Hilfe der Anordnung elektrisch miteinander verbunden werden können, wenn ein Nahfeld-Kommunikationsmodul (5) in der Anordnung vorhanden ist.

3. Einrichtung nach Anspruch 2, wobei das zweite Verbindungsstück (8) wenigstens einen dritten Kontakt (86) aufweist, der mit wenigstens einem zweiten Kontakt (76) des ersten Verbindungsstücks (7) verbunden ist.

4. Einrichtung nach Anspruch 3, wobei das zweite Verbindungsstück (8) wenigstens einen vierten und einen fünften Kontakt aufweist, die mit dem Schaltkreis (2) verbunden sind.

5. Einrichtung nach Anspruch 4, wobei das zweite Verbindungsstück (8) wenigstens einen sechsten Kontakt (83) aufweist, der mit dem Schaltkreis (2) verbunden ist.

6. Einrichtung nach einem der Ansprüche 2 bis 5, mit ferner einem mechanischen Schalter (87) zur Verbindung des ersten und des zweiten Kontakts (81, 82) des zweiten Verbindungsstücks (8), der von der Anordnung (6, 6') betätigt werden kann.
